# EUROPEAN PATENT APPLICATION

(11) **EP 1 228 903 A2**
(43) Date of publication of application: **07.08.2002**
(21) Application number: 02100062.5
(22) Date of filing: 28.01.2002
(51) Int. Cl.: B60C 11/04, B60C 1/00, B60C 11/00

(54) **Tire having tread with colored grooves**

(30) Priority: 01.02.2001 US 265726
(71) Applicant: THE GOODYEAR TIRE & RUBBER COMPANY, Akron, Ohio 44316-0001 (US)
(72) Inventor: Sandstrom, Paul Harry, Cuyahoga Falls, OH 44223 (US); Zanzig, David John, Uniontown, OH 44658 (US); Sinsky, Mark Samuel, Akron, OH 44313 (US)
(74) Representative: Leitz, Paul

(57) **Abstract**

The present invention relates to a tire having a tread of lug and groove configuration of a black-colored, carbon black reinforced rubber composition, wherein at least a portion of the visible surface of at least one of said grooves, exclusive of the outer surface portion of said carbon black reinforced rubber lugs intended to be ground-contacting, is of a non-black colored, synthetic amorphous silica reinforced rubber composition exclusive of carbon black.

## Description

### Field of the Invention

The present invention relates to a tire having a tread of lug and groove configuration of a black-colored, carbon black reinforced rubber composition, wherein at least a portion of the visible surface of at least one of said grooves, exclusive of the outer surface portion of said carbon black reinforced rubber lugs intended to be ground-contacting, is of a non-black colored, synthetic amorphous silica reinforced rubber composition exclusive of carbon black.

### Background of the Invention

Most tires have a tread of a lug and groove configuration of a rubber composition which contains carbon black and is therefore black in color.

Sometimes, it may be desired to provide a tire tread of a color other than black or of a multiplicity of colors including black. For example, a tire with tread of mixed colors has been proposed in which a central portion of the tread is a non-black silica reinforced rubber and the axially outboard portions of the tread are of a black-colored, carbon black reinforced rubber composition. For example, see WO-A1- 99/01299.

Also, it has previously been proposed to provide a tire with a tread which contains silica reinforcement which may exclude carbon black and therefore may be of a color other than black. For example, see AT-A- 335 726 (Metzler AG, Munich).

A significant disadvantage of tires with treads of lug and groove configuration where the outer surface of the tread lugs designed to be ground-contacting is of a non-black color is
(A) a tendency of such tire tread lugs to leave colored markings on the road over which they travel, which can be objectionable where such roads have other colored markings designed to aid or control vehicular traffic patterns and
(B) a tendency of the outer non-black tread lug surface to become discolored, particularly unevenly discolored, as the outer surface of the tread lugs travel over surfaces such as, for example, asphalt roads.

However, it remains desirable for some purposes to provide a tire with a tread of which at least a portion is of a non-black color.

In the description of this invention, the terms "rubber" and "elastomer" if used herein, may be used interchangeably, unless otherwise prescribed. The terms "rubber composition", "compounded rubber" and "rubber compound", if used herein, are used interchangeably to refer to "rubber which has been blended or mixed with various ingredients and materials" and such terms are well known to those having skill in the rubber mixing or rubber compounding art.

In the description of this invention, the term "phr" refers to parts of a respective material per 100 parts by weight of rubber, or elastomer. The terms "rubber" and "elastomer" may be used interchangeably unless otherwise indicate. The terms "cure" and "vulcanize" may be used interchangeably unless otherwise indicated.

### Summary and Practice of the Invention

In accordance with this invention, a tire is provided with a rubber tread of a lug and groove configuration wherein the outer surface of said tread lugs are designed to be ground contacting and wherein:
(A) said rubber tread is comprised of at least one hydrocarbon diene-based elastomer which contains carbon black and is therefore of a black color derived from said carbon black, and wherein
(B) at least a portion of said tread grooves have a non-black colored, particulate amorphous silica reinforced rubber layer on at least a portion of, and integral with, a visible surface of at least one of said tread grooves wherein said non-black colored rubber layer is comprised of at least one diene-based elastomer, is exclusive of carbon black and does not extend over the outer surface of said black colored tread lugs designed to be ground contacting.

In practice, said silica reinforcement of said non-black colored rubber layer on the surface of said tread grooves is preferably a synthetic amorphous precipitated, preferably aggregates of precipitated silica, together with a coupling agent for said silica having a moiety reactive with hydroxyl groups (e.g. silanol groups) contained on the surface of said silica and another moiety interactive with at least one of said diene-based elastomers.

It is to be appreciated that various non-black colorants may be used for said non-black colored rubber layer, including, for example, various pigments and oil soluble dies.

In the practice of this invention, said non-black colored rubber composition may be prepared, for example, by mixing in at least one sequential preparatory (non-productive) blending step in at least one sequential internal rubber mixer to a temperature in a range of 150°C to 180°C a blend of said diene-based elastomer(s) with said synthetic amorphous silica, in the absence of sulfur curative, followed by blending the mixture thereof with sulfur curative(s) in a subsequent (productive) blending step in an internal rubber mixer to a temperature in a range of 110°C to 120°C.

Therefore, the rubber composition for said non-black tread rubber layer composition may be prepared, for example, in a sequential series of at least two separate and individual preparatory internal rubber mixing steps, or stages, in which the diene-based elastomer is first mixed with the prescribed silica in the absence of carbon black, in a subsequent, separate mixing step and followed by a final mixing step where curatives are blended at a lower temperature and for a substantially shorter period of time.

It is conventionally required after each mixing step that the rubber mixture is actually removed from the rubber mixer and cooled to a temperature in a range of 50°C to 20°C and then added back to an internal rubber mixer for the next sequential mixing step, or stage.

Representative coupling agents to blended with silica-containing elastomer, typically in a preparative, non-productive, mix stage, are, for example, bis (3-alkoxysilylalkyl) polysulfides which contain an average of from 2 to 4, connecting sulfur atoms in their polysulfidic bridge in which a portion of the coupling agent is expected to react with hydroxyl groups (e.g. silanol groups) on the surface of the silica. Exemplary of such polysulfides are, for example, bis (3-triethoxysilylpropyl) disulfide type materials having an average of 2 to 2.6 connecting sulfur atoms in its polysulfidic bridge and tetrasulfide type materials having an average of 3.5 to 4 connecting sulfur atoms in its polysulfidic bridge.

For a further understanding of the invention, a drawing is presented to depict a tire with tread of a lug and groove configuration in which a visible surface of at least on of said tread grooves has a layer of a rubber composition which is a non-black color.

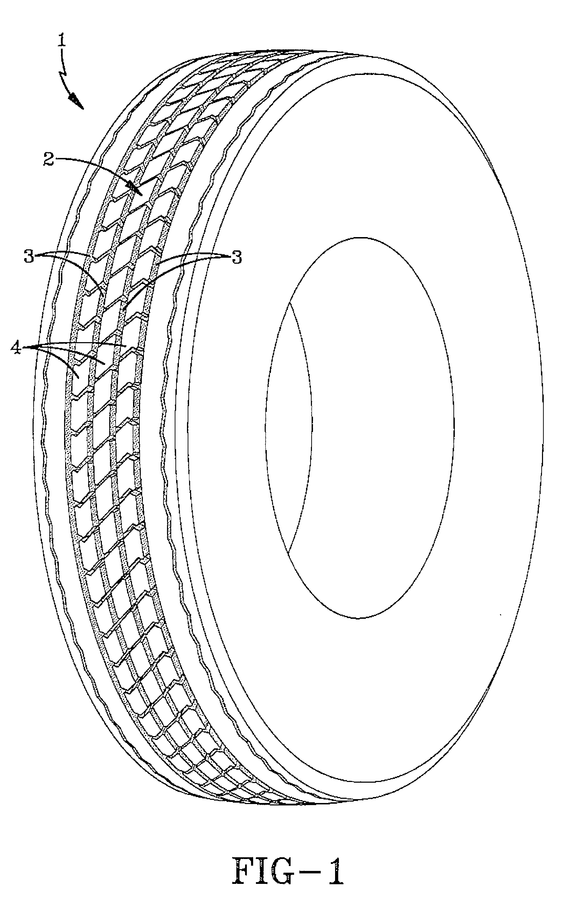

In particular, FIG 1 is a perspective view of a tire 1 having a tread 2 of a lug and groove configuration in which a visible surface of the tread grooves 3 are of color other than the black colored of the surface 4 of the tread lugs designed to be ground contacting.

The forming of a tire component is contemplated to be by conventional means such as, for example, by extrusion of rubber composition to provide a shaped, unvulcanized rubber component such as, for example, a tire tread. Such forming of a tire tread is well known to those having skill in such art.

The non-black rubber layer on the surface of at least one groove may, for example, be co-extruded with the remainder of the tread rubber to form a shaped tread strip prior to building the strip onto the tire carcass.

It is understood that the tire, as a manufactured article, is prepared by shaping and sulfur curing the assembly of its components at an elevated temperature (e.g. 140°C to 180°C) and elevated pressure in a suitable mold. Such practice is well known to those having skill in such art.

The diene-based elastomers for the tire tread rubber compositions used for the tread of this invention, are, for example, homopolymers and copolymers of at least one conjugated diene such as, for example, isoprene and/or 1,3-butadiene and copolymers of at least one conjugated diene, such as for example, isoprene and/or 1,3-butadiene, and a vinyl aromatic compound such as styrene or alphamethyl styrene, preferably styrene.

Representative of such diene-based elastomers are, for example, elastomers comprised of cis 1,4-polyisoprene (natural and synthetic), cis 1,4-polybutadiene, high vinyl polybutadiene having a vinyl 1,2-content in a range of 35 to 90 percent, isoprene/butadiene copolymer elastomers, styrene/butadiene copolymer elastomers (organic solvent solution polymerization formed or prepared and aqueous emulsion polymerization formed or prepared), and styrene/isoprene/butadiene terpolymer elastomers.

Synthetic amorphous silicas for use in this invention are usually aggregates of precipitated silicas although they may be fumed silicas. Precipitated silicas are, for example, those obtained by the acidification of a soluble silicate, e.g., sodium silicate, including blends of a sodium silicate and aluminate. Such precipitated silicas are well known to those having skill in such art.

It is readily understood by those having skill in the art that the rubber composition for use in this invention would be compounded by methods generally known in the rubber compounding art, such as mixing the various sulfur-vulcanizable constituent rubbers with various commonly used additive materials, as herein before discussed, such as, for example, curing aids such as sulfur, activators, retarders and accelerators, processing additives, such as rubber processing oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of fatty acids, if used and which can include stearic acid, comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to 8 phr, with a range of from 1.5 to 2.5, sometimes from 2 to 2.5, being preferred.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4, preferably 0.8 to 1.5, phr. In another embodiment, combinations of a primary and a secondary accelerator might be used with the secondary accelerator being used in smaller amounts (of 0.05 to 3 phr) in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

As hereinbefore discussed, the mixing of the rubber composition can preferably be accomplished by the aforesaid sequential mixing process. For example, the ingredients may be mixed in at least three stages, namely, at least two non-productive (preparatory) stages followed by a productive (final) mix stage. The final curatives are typically mixed in the final stage which is conventionally called the "productive" or "final" mix stage in which the mixing typically occurs at a temperature, or ultimate temperature, lower than the mix temperature(s) of the preceding non-productive mix stage(s). The terms "non-productive" and "productive" mix stages are well known to those having skill in the rubber mixing art.

## Claims

1. A tire with a rubber tread of a lug and groove configuration wherein the outer surface of said tread lugs are designed to be ground contacting **characterized in that**:
(A) said rubber tread is comprised of at least one hydrocarbon diene-based elastomer and contains carbon black and is therefore of a black color derived from said carbon black, and wherein
(B) at least a portion of said tread grooves have a non-black colored, particulate amorphous silica reinforced, rubber layer on at least a portion of, and integral with, a visible surface of at least one of said tread grooves wherein said non-black colored rubber layer is comprised of at least one diene-based elastomer, is exclusive of carbon black and does not extend over the outer surface of said black colored tread lugs designed to be ground contacting.

2. The tire of claim 1 **characterized in that** said silica is precipitated silica.

3. The tire of claim 1 **characterized in that** said non-black colored rubber layer contains a coupling agent having a moiety reactive with hydroxyl groups contained on the surface of said silica and another moiety interactive with at least one of said elastomers.

4. The tire of claim 2 **characterized in that** said non-black colored rubber layer contains a coupling agent having a moiety reactive with hydroxyl groups contained on the surface of said silica and another moiety interactive with at least one of said elastomers.

5. The tire of claim 3 **characterized in that** said coupling agent is a bis (3-alkoxysilylalkyl) polysulfide having an average of from 2 to 2.6 or from 3.5 to 4 connecting sulfur atoms in its polysulfidic bridge.

6. The tire of claim 4 **characterized in that** said coupling agent is a bis (3-alkoxysilylalkyl) polysulfide having an average of from 2 to 2.6 or from 3.5 to 4 connecting sulfur atoms in its polysulfidic bridge.
